# EUROPEAN PATENT APPLICATION

(11) **EP 4 645 662 A1**
(43) Date of publication of application: **05.11.2025**
(21) Application number: 22970120.6
(22) Date of filing: 27.12.2022
(51) Int. Cl.: H02M 3/155

(54) **LOAD DRIVING DEVICE AND METHOD FOR CONTROLLING LOAD DRIVING DEVICE**

(71) Applicant: Astemo, Ltd., Tokyo 100-0004 (JP)
(72) Inventor: TSUKIO, Koichi, Hitachinaka-shi Ibaraki 312-8503 (JP)
(74) Representative: Strehl & Partner mbB
(86) International application number: PCT/JP2022/048411
(87) International publication number: WO 2024/142331

(57) **Abstract**

Provided is a highly reliable load driving device including a plurality of booster circuits connected in parallel, where even when some booster circuits fail while protecting components of the booster circuits, another normal booster circuit can continue the boosting operation. A load driving device includes a first booster circuit; a second booster circuit connected in parallel to the first booster circuit; a first current cutoff circuit disposed on an upper stage side of the first booster circuit; a second current cutoff circuit disposed on a lower stage side of the first booster circuit; a third current cutoff circuit disposed on an upper stage side of the second booster circuit; a fourth current cutoff circuit disposed on a lower stage side of the second booster circuit; and a calculation device configured to calculate a control command for controlling the first booster circuit and the second booster circuit, in which when a failure of the first booster circuit is detected, the calculation device causes the first current causes circuit to cut off a current from a power supply to the first booster circuit, and changes a current set value of the second booster circuit to be lower than that before the failure to operate the second booster circuit.

## Description

### Technical Field

The present invention relates to a configuration of a load driving device configured to drive and control a load and a method for controlling the same, and particularly relates to a technique that is effective when applied to an in-vehicle load driving device required to have high reliability.

### Background Art

From the viewpoint of environmental conservation, it is required to reduce harmful exhaust gases such as CO, HC, and NOx contained in exhaust gases of gasoline vehicles, and regulations have become stricter year by year. Among them, measures for suppressing penetration of fuel injection have been taken, and among them, a multi-stage injection technique of continuously injecting a single injection valve within a certain period of time is known.

Since an energy of greater than or equal to a certain level is required to open the fuel injection valve, a method for boosting the battery voltage by a booster circuit is common, but since the multi-stage injection continuously performs fuel injection within a certain period of time, it is necessary to increase the charging speed by the boosting so that the energy supply is in time for each stage. As one method for increasing the charging speed, parallelization of the booster circuit is considered.

On the other hand, when any component of the booster circuits connected in parallel has a short-circuit failure in the GND, there is a problem that all the booster circuits fail or stop together. Stopping the booster circuit means that the valve opening energy of the fuel injection valve is insufficient and fuel injection cannot be performed, that is, it leads to stopping of the engine and is dangerous.

Therefore, as a fail-safe mechanism of the vehicle, it is conceivable to continue the boosting operation by operating a non-failed circuit when any of the paralleled booster circuits fails.

As a background art of the present technical field, for example, there is a technique such as PTL 1. PTL 1 discloses "A technique in which, in a booster circuit in which two or more boosting portions are arranged in parallel, a current cutoff switch is provided in an upper stage on a power supply side of the booster circuit, and when a short-circuit failure occurs in a MOSFET, a failed circuit is electrically separated by the current cutoff switch, so that a boosting operation is continued only by the booster circuit that has not failed".

### Citation List

### Patent Literature

PTL 1: JP 4848216 A

### Summary of Invention

### Technical Problem

By the way, in the technique of PTL 1 described above, when the MOSFET of the booster circuit fails, it is possible to electrically separate the failed circuit and continue the boosting operation in the other non-failed booster circuit, but when a diode or a capacitor that is another component of the booster circuit fails, it is not possible to electrically separate the failed circuit, and hence there is a problem that the boosting operation becomes difficult to continue.

In addition, it is known that many of the short-circuit failures except for the initial failure of the MOSFET in the booster circuit are failures due to exceeding the rating of the power consumption, and since the boosting operation is usually designed to control the power consumption, many of these failures are suppressed within the design range.

On the other hand, other components, particularly capacitors, are characterized in that since electrolytic capacitors are generally used, they are weak against heat and current fluctuation at the time of boosting, and when used as a component of a booster circuit, the life thereof is particularly short as compared with other components.

In addition, the component is weak against a voltage greater than or equal to the withstand voltage, and for example, when a voltage greater than or equal to the rated voltage is applied from a vehicle or the like unintentionally, the component easily fails and has a high possibility of failing without the intention of a designer, but is not subject to electrical separation in PTL 1.

Therefore, an object of the present invention is to provide a highly reliable load driving device and a method for controlling the load driving device, in which, in a load driving device having a plurality of booster circuits connected in parallel, even when some booster circuits fail while protecting components of the booster circuit, another normal booster circuit can continue the boosting operation.

### Solution to Problem

In order to solve the above problem, the present invention includes a first booster circuit, a second booster circuit connected in parallel to the first booster circuit, a first current cutoff circuit disposed on an upper stage side of the first booster circuit, a second current cutoff circuit disposed on a lower stage side of the first booster circuit, a third current cutoff circuit disposed on an upper stage side of the second booster circuit, a fourth current cutoff circuit disposed on a lower stage side of the second booster circuit, and a calculation device configured to calculate a control command for controlling the first booster circuit and the second booster circuit, wherein when a failure of the first booster circuit is detected, the calculation device causes the first current cutoff circuit to cut off a current from a power supply to the first booster circuit, and changes a current set value of the second booster circuit to be lower than that before the failure to operate the second booster circuit.

Furthermore, the present invention is a method for controlling a load driving device including a plurality of booster circuits connected in parallel, the method including (a) detecting a failure of a booster circuit, (b) cutting off a current to the failed booster circuit based on failure information detected in the step (a), and (c) after the step (b), changing a current sett value of a booster circuit other than the failed booster circuit to be lower than that before the failure to operate the booster circuit other than the failed booster circuit.

### Advantageous Effects of Invention

According to the present invention, it is possible to realize a highly reliable load driving device and a method for controlling the load driving device, in which, in a load driving device including a plurality of booster circuits connected in parallel, even when some booster circuits fail while protecting components of the booster circuits, another normal booster circuit can continue the boosting operation.

As a result, for example, in a fuel injection system of an automobile, the supply of energy for opening the fuel injection valve can be continued, and the engine can be prevented from stopping due to a failure of one circuit in the parallel circuits.

Problems, configurations, and effects other than those described above will be clarified by the following description of embodiment.

### Brief Description of Drawings

[FIG. 1] FIG. 1 is a functional block diagram of a fuel injection valve control device according to a first example of the present invention.
[FIG. 2] FIG. 2 is a flowchart illustrating a method for controlling the fuel injection valve control device 1 of FIG. 1.
[FIG. 3] FIG. 3 is a timing chart illustrating an operation example of the fuel injection valve control device 1 of FIG. 1.
[FIG. 4] FIG. 4 is a functional block diagram of a fuel injection valve control device according to a second example of the present invention.
[FIG. 5] FIG. 5 is a timing chart illustrating an operation example of the fuel injection valve control device 1 of FIG. 4.
[FIG. 6] FIG. 6 is a functional block diagram of a fuel injection valve control device according to a third example of the present invention.
[FIG. 7] FIG. 7 is a functional block diagram of a fuel injection valve control device according to a fourth example of the present invention.

### Description of Embodiments

Hereinafter, examples of the present invention will be described with reference to the drawings. Note that in the drawings, the same components are denoted by the same reference numerals, and the detailed description of overlapping portions will be omitted.

### First Example

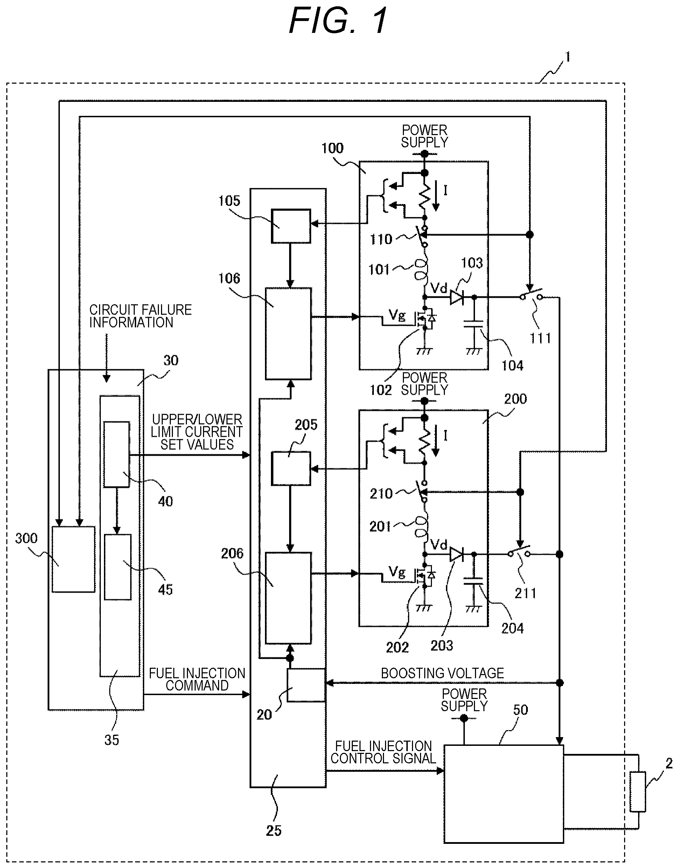

A fuel injection valve control device and a method for controlling the fuel injection control valve according to a first example of the present invention will be described with reference to FIGS. 1 through 3.

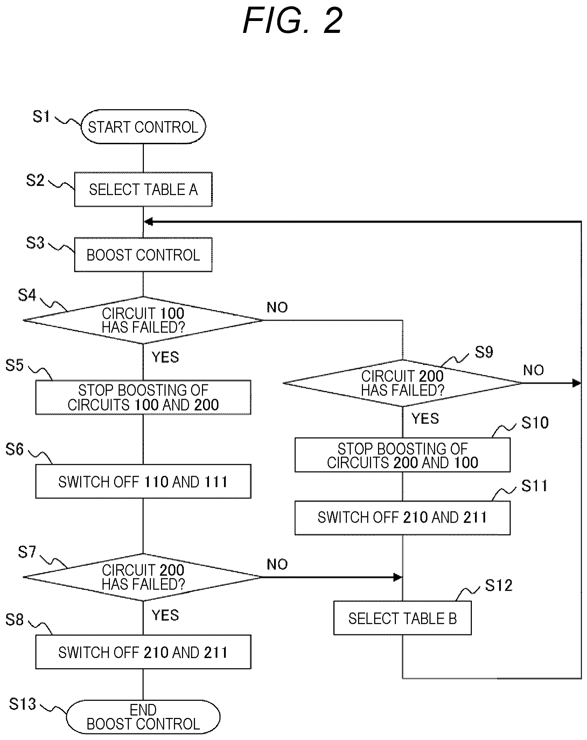

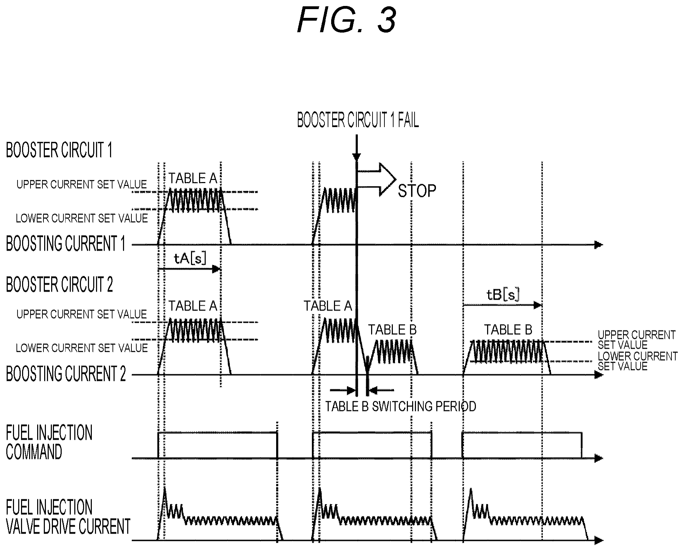

FIG. 1 is a functional block diagram of a fuel injection valve control device 1 of the present example. FIG. 2 is a flowchart illustrating a method for controlling the fuel injection valve control device 1 of FIG. 1. FIG. 3 is a timing chart illustrating an operation example of the fuel injection valve control device 1 of FIG. 1.

As illustrated in FIG. 1, the fuel injection valve control device 1 of the present example includes, as main components, a fuel injection control IC 25, a calculation device 30, a fuel injection circuit 50, and a plurality of booster circuits (two booster circuits 100 and 200 in FIG. 1) connected in parallel with each other between the fuel injection control IC 25 and the fuel injection circuit 50.

The fuel injection control IC 25 includes a voltage monitor 20, a current monitor 105, a boost controller 106, a current monitor 205, and a boost controller 206.

The calculation device 30 includes a boost setting controller 35 having a current table selector 40 and a current table 40, and a current cutoff controller 300.

The booster circuit 100 is configured to include a booster coil 101, a booster driver (FET) 102, a booster diode 103, and a booster capacitor 104. An upstream stage current cutoff circuit 110 is disposed on the upper stage side of the booster circuit 100, and a downstream stage current cutoff circuit 111 is disposed on the lower stage side.

The booster circuit 200 is configured to include a booster coil 201, a booster driver (FET) 202, a booster diode 203, and a booster capacitor 204. An upstream stage current cutoff circuit 210 is disposed on the upper stage side of the booster circuit 200, and a downstream stage current cutoff circuit 211 is disposed on the lower stage side.

The fuel injection valve control device 1 is connected to the fuel injection valve 2, which is a load, and controls driving of the fuel injection valve 2.

Note In the present example, the booster circuits are configured to be two in parallel, but a case where the number of booster circuits in parallel is in plurals of three or more depending on the application is also assumed. Even in that case, it is assumed that the basic configuration is such that the configuration of one booster circuit to be described later is arranged in parallel with a similar configuration.

When the upper/lower limit current set values of the boost control are set to the fuel injection control IC 25 from the boost setting controller 35 in the calculation device 30, the boost controller 106 and the boost controller 206 measure the boosting voltage by the voltage monitor 20 configured to measure the boosting voltage, and start the boosting operation when the boosting voltage is less than or equal to a predetermined voltage.

During boosting, the current monitor 105 and the current monitor 205 measure the circuit currents flowing through the booster circuit 100 and the booster circuit 200, respectively, and the boost controller 106 and the boost controller 206 perform Duty control on the booster driver 102 and the booster driver 202, respectively, so that the measured current values in the current monitor 105 and the current monitor 205 become similar to the upper/lower limit current set values described above.

An upstream stage current cutoff circuit 110 and an upstream stage current cutoff circuit 210 for cutting off the circuit current are provided on the power supply side of booster coil 101 and booster coil 201 in booster circuit 100 and booster circuit 200, and furthermore, a downstream stage current cutoff circuit 111 and a downstream stage current cutoff circuit 211 similar to the upstream stage current cutoff circuit 110 and the upstream stage current cutoff circuit 210 are provided on the cathode side of the booster diode 103 and the booster diode 203, that is, the voltage output side of each of booster circuit 100 and booster circuit 200. With such a configuration, when the booster circuit 100 or the booster circuit 200 is abnormal, the current flowing through the circuit can be cut off by the upstream stage current cutoff circuit 110 and 210 and the downstream stage current cutoff circuit 111 and 211 according to a command from the current cutoff controller 300 in the calculation device 30.

In the present example, the upstream stage current cutoff circuit 110 and the downstream stage current cutoff circuit 111, and the upstream stage current cutoff circuit 210 and the downstream stage current cutoff circuit 211 are paired, and the current can be cut off according to a command from the current cutoff controller 300 in the calculation device 30.

For example, when an abnormality occurs in the booster circuit 100, current can be simultaneously cut off by the upstream stage current cutoff circuit 110 and the downstream stage current cutoff circuit 111 according to a command from the current cutoff controller 300 in the calculation device 30. For example, when an abnormality occurs in the booster circuit 200, current can be simultaneously cut off by the upstream stage current cutoff circuit 210 and the downstream stage current cutoff circuit 211 according to a command from the current cutoff controller 300 in the calculation device 30.

Note that in the present example, each of the booster circuits 100,200 has a configuration in which the upstream stage and the downstream stage of the current cutoff circuit are paired, but a configuration in which all the current cutoff circuits are controlled independently of each other will be described later in second example.

The voltage monitor 20 measures the boosting voltage stored by the boosting operation, and when the boosting voltage reaches a predetermined voltage, the boost controller 106 and the boost controller 206 stop the boosting operation.

The upper/lower limit current set values set from the boost setting controller 35 in the calculation device 30 to the fuel injection control IC 25 are selected from the current table 45 by the current table selector 40.

The fuel injection control IC 25 receives a fuel injection command generated by the calculation device 30 based on an engine rotation signal separately from the boosting operation, and outputs a fuel injection control signal to the fuel injection circuit 50, so that the fuel injection circuit 50 drives the fuel injection valve 2 to perform fuel injection.

Note that the boosting voltage generated by the booster circuit 100 and the booster circuit 200 and the power supply voltage are used as the valve opening energy of the fuel injection valve 2.

Next, an operation example of the fuel injection valve control device 1 will be described using the flowchart of FIG. 2 and the timing chart of FIG. 3.

When the control of the boosting operation is started (step S1), first, the current table selector 40 selects a table A from the upper/lower limit current set value table A and table B, which are the boost control currents in the current table 45 (step S2).

In the two upper/lower limit current set value tables A and B, as illustrated in FIG. 3, the relationship of the boost average current is "Table B < Table A". Table A shows the upper/lower limit current set values suitable for a case where all the booster circuits connected in parallel are normal, and table B shows the upper/lower limit current set values suitable for a case where one booster circuit has failed.

Note that in the present example, since the two booster circuits are in parallel, there are two current tables 45, but in a case where the number of parallel booster circuits is three or more, the same number of tables as the number of parallel booster circuits are prepared, and the relationship in the booster average currents of the upper/lower limit current set values is such that table A is an upper/lower limit current set value suitable for a case where all the booster circuits are normal, and the second and subsequent tables are upper/lower limit current set values suitable for the number of failures each time the number of failed booster circuit increases.

In the relationship among the boost average currents in each of the tables, the boost average current is set to be lower in a table suitable for a case where the number of fault circuits is large. For example, in a case where three booster circuits are arranged in parallel, three tables of a table A, a table B, and a table C are prepared, and the relationship among the boost average currents is "table C < table B < table A".

Table A shows the upper/lower limit current set values suitable for a case where all the booster circuits connected in parallel are normal, Table B shows the upper/lower limit current set values suitable for a case where one booster circuit has failed, and Table C shows the upper/lower limit current set values suitable for a case where two booster circuits have failed.

The boost setting controller 35 that has selected the table A of the upper/lower limit current set values by the current table selector 40 issues a command for upper/lower limit current setting to the fuel injection control IC 25.

Next, the fuel injection control IC 25 that has received the command from the boost setting controller 35 starts the boost control using the booster circuit 100 and the booster circuit 200 (step S3).

During the boost control, the current cutoff controller 300 performs ON/OFF control of the upstream stage current cutoff circuits 110 and 210 and the downstream stage current cutoff circuits 111 and 211 based on the circuit failure information of the booster circuit.

The calculation device 30 determines the presence or absence of a failure of the booster circuit 100 based on the input circuit failure information (step S4).

When detected from the failure information of the booster circuit 100 that the booster circuit 100 has failed (YES), the boosting of the booster circuit 100 and the booster circuit 200 is stopped (step S5), and the upstream stage current cutoff circuit 110 and the downstream stage current cutoff circuit 111 are turned OFF (step S6) to cut off the current I flowing from the power supply to the booster circuit 100.

Thereafter, the calculation device 30 determines the presence or absence of a failure of the booster circuit 200 based on the input circuit failure information (step S7).

When detected from the failure information of the booster circuit 200 that the booster circuit 200 has failed (YES), the upstream stage current cutoff circuit 210 and the downstream stage current cutoff circuit 211 are turned OFF (step S8) to cut off the current I flowing from the power supply to the booster circuit 200, and the boost control is ended (step S13).

When detected in step S7 that the booster circuit 200 has not failed (normally functioning) (NO), the table B of the upper/lower limit current set values is selected by the current table selector 40 (step S12), a command to set the upper/lower limit currents is issued to the fuel injection control IC 25, and the fuel injection control IC 25 starts the boosting operation by the booster circuit 200.

On the other hand, when detected in step S4 that the booster circuit 100 has not failed (normally functioning) (NO), the presence or absence of failure of the booster circuit 200 is determined based on the input circuit failure information (step S9).

When detected from the failure information of the booster circuit 200 that the booster circuit 200 has failed (YES), the boosting of the booster circuit 200 and the booster circuit 100 is stopped (step S10), the upstream stage current cutoff circuit 210 and the downstream stage current cutoff circuit 211 are turned OFF (step S11) to cut off the current flowing from the power supply to the booster circuit 200, and thereafter, the table B of the upper/lower limit current set values is selected by the current table selector 40 (step S12), a command to set the upper/lower limit current is issued to the fuel injection control IC 25, and the fuel injection control IC 25 starts the boosting operation by the booster circuit 100.

In addition, when detected in step S9 that the booster circuit 200 has not failed (normally functioning) (NO), a failure of the booster circuit does not occur together with the booster circuit 100, and hence the boost control is continued in the state of the table A of the upper/lower limit current set values (step S3).

Note that in the flowchart of FIG. 2, the process is performed from the failure information of the booster circuit 100 first, but it is also assumed that the process is performed from the failure information of the booster circuit 200 or the failure information of the booster circuit 100 and the booster circuit 200 are simultaneously processed. Furthermore, as the failure information of the booster circuit input to the calculation device 30, information obtained from the fuel injection control IC 25, information determined by the calculation device 30 itself, information obtained by a failure determination circuit (not illustrated), and the like are assumed.

According to the present example, by cutting off the current flowing from the power supply to the failed booster circuit, the failed booster circuit is electrically separated, and by changing to the upper/lower limit current set values suitable for the remaining booster circuit, the other booster circuit that has not failed can continue the boosting operation without thermal breakdown due to the boosting loss.

As a result, it is possible to continue the supply of energy for opening the fuel injection valve and to prevent the engine from stopping due to a failure of one circuit in the parallel circuits.

In addition, by cutting off the current continuing to flow from the power supply to the failed circuit, it is possible to prevent secondary failures such as burnout of the substrate due to further heat generation of the fault circuit portion, dielectric breakdown of the capacitor included in the booster circuit, and breakdown of the power supply circuit that is a current supply source to the booster circuit due to continuous flow of the power supply current to the fault circuit.

### Second Example

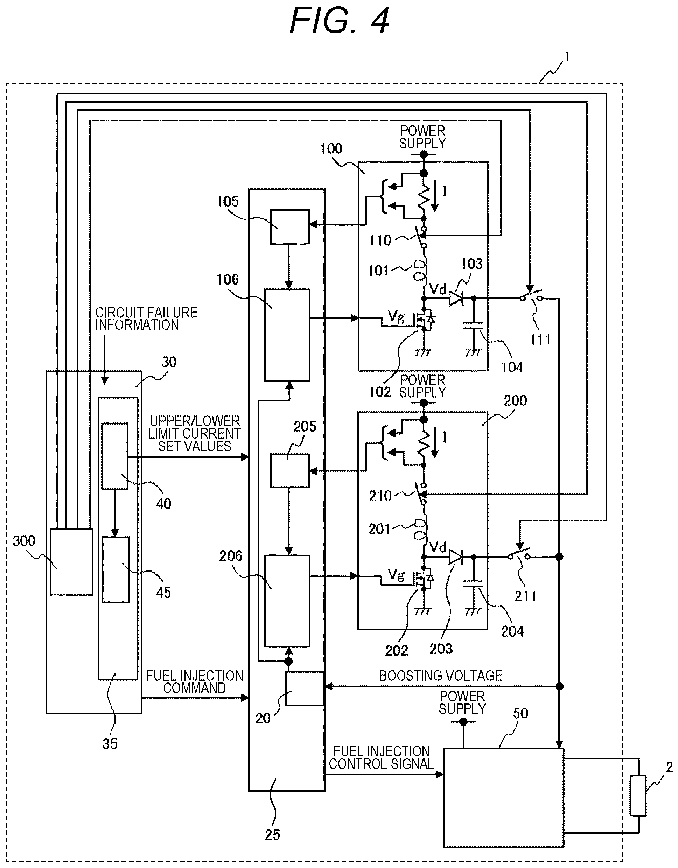

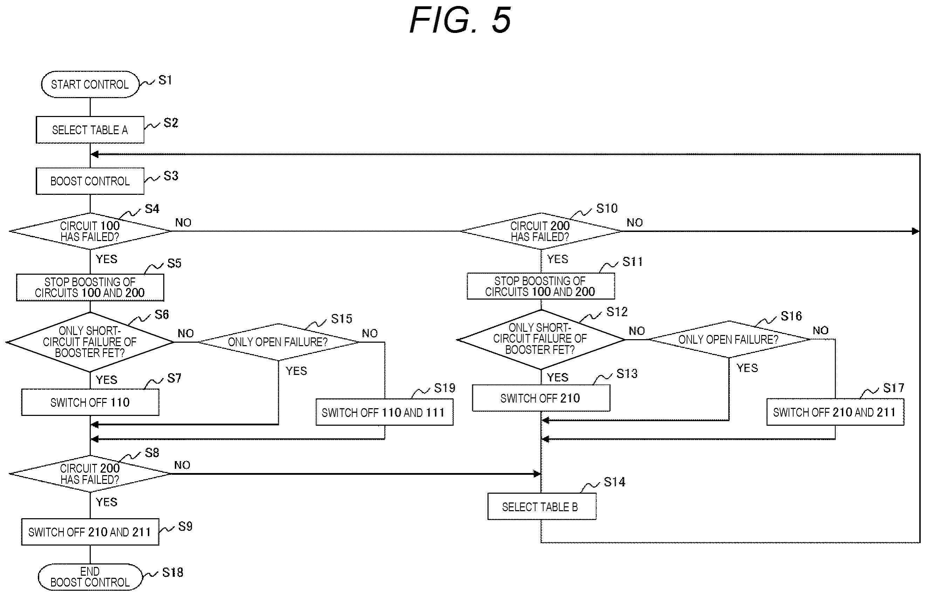

A fuel injection valve control device and a method for controlling the fuel injection valve control device according to a second example of the present invention will be described with reference to FIGS. 4 and 5.

FIG. 4 is a functional block diagram of a fuel injection valve control device 1 of the present example. FIG. 5 is a flowchart illustrating a method for controlling the fuel injection valve control device 1 of FIG. 4.

In the first example (FIG. 1), the ON/OFF control of the upstream stage current cutoff circuit and the downstream stage current cutoff circuit included in each booster circuit is simultaneously performed by the current cutoff controller 300 for each booster circuit, but in the present example (FIG. 4), the ON/OFF control of the upstream stage current cutoff circuit and the downstream stage current cutoff circuit can be controlled independently of each other by each cutoff circuit.

Basic components of the booster circuit include a booster coil, a booster driver (FET), a booster diode, and a booster capacitor, where when each component has a short-circuit failure with the GND, the power supply current flows into the failed circuit, and thus it is not possible to continue boosting of all the booster circuits connected in parallel, but when the above component has an open failure, the power supply current does not flow into the failed circuit, and thus a secondary failure does not occur.

When there is a booster circuit in which all the components are normal, boosting can be continued without cutting off the current, and furthermore, when the booster capacitor has not failed, it is possible to play a role of a rechargeable battery of the booster circuit that has not failed.

The same applies to the short-circuit failure of the booster driver (FET), where in the case of the short-circuit failure of the booster driver (FET), if the current flowing through the booster driver (FET) having the short-circuit failure can be cut off, the booster capacitor can be continuously used as the rechargeable battery if the booster capacitor does not fail.

In the first example (FIG. 1), the ON/OFF control of the upstream stage current cutoff circuit and the downstream stage current cutoff circuit provided in each booster circuit is simultaneously performed, and the current cutoff circuit is turned OFF based on the failure determination to electrically separate the entire failed booster circuit from the normal booster circuit, so that even in a case where the booster capacitor of the failed booster circuit is continuously available, the booster circuit cannot be continuously used as a rechargeable battery.

Therefore, in the present example, by configuring the current cutoff circuits of the upstream stage and the downstream stage to be controlled independently of each other, it becomes possible to turn OFF only the upstream stage current cutoff circuit at the time of a short-circuit failure of the booster driver (FET), and it becomes possible to electrically separate the short-circuited booster driver (FET) by cutting off the current flowing into the short-circuited booster driver (FET) and preventing the backflow of the current flowing from the non-faulty booster circuit to the short-circuited booster driver (FET) by the backflow preventing booster diode provided as the basic configuration of the booster circuit.

An operation example of the fuel injection valve control device 1 of the present example will be described with reference to a flowchart of FIG. 5.

When the control of the boosting operation is started (step S1), first, the current table selector 40 selects a table A from the upper/lower limit current set value table A and table B, which are the boost control currents in the current table 45 (step S2). The contents of the two upper/lower limit current set value tables A and B are the same as those in the first example.

Next, the fuel injection control IC 25 that has received the command from the boost setting controller 35 starts the boost control using the booster circuit 100 and the booster circuit 200 (step S3).

Thereafter, the calculation device 30 determines the presence or absence of a failure of the booster circuit 100 based on the input circuit failure information (step S4).

When detected from the failure information of the booster circuit 100 that the booster circuit 100 has failed (YES), the boosting of the booster circuit 100 and the booster circuit 200 is stopped (step S5).

Next, the calculation device 30 determines whether or not the occurring failure is only a short-circuit failure of the booster driver (FET) 102 on the basis of the input circuit failure information (step S6).

When detected that the occurring failure is only the short-circuit failure of the booster driver (FET) 102 (YES), the upstream stage current cutoff circuit 110 is turned OFF (step S7) to prevent the current I from flowing from the power supply to the GND via the failed booster driver (FET) 102.

Thereafter, the calculation device 30 determines the presence or absence of a failure of the booster circuit 200 based on the input circuit failure information (step S8).

When detected from the failure information of the booster circuit 200 that the booster circuit 200 has failed (YES), the upstream stage current cutoff circuit 210 and the downstream stage current cutoff circuit 211 are turned OFF (step S9) to cut off the current I flowing from the power supply to the booster circuit 200, and the boost control is ended (step S18).

On the other hand, when detected in step S4 that the booster circuit 100 has not failed (normally functioning) (NO), the presence or absence of a failure of the booster circuit 200 is determined based on the input circuit failure information (step S10).

When detected from the failure information of the booster circuit 200 that the booster circuit 200 has failed (YES), the boosting of the booster circuit 200 and the booster circuit 100 is stopped (step S11).

Next, the calculation device 30 determines whether or not the occurring failure is only a short-circuit failure of the booster driver (FET) 202 based on the input circuit failure information (step S12).

When detected that the occurring failure is only the short-circuit failure of the booster driver (FET) 202 (YES), the upstream stage current cutoff circuit 210 is turned OFF (step S13) to prevent the current I from flowing from the power supply to the GND via the failed booster driver (FET) 202.

Thereafter, the current table selector 40 selects the table B of upper/lower limit current set values (step S14), and issues a command for upper/lower limit current setting to the fuel injection control IC 25, so that the fuel injection control IC 25 continues the boosting operation by the booster circuit 100.

When detected in step S12 that the occurring failure is not a short-circuit failure of the booster driver (FET) 202 (NO), the calculation device 30 determines whether or not the occurring failure is only an open failure of the booster driver (FET) 202 based on the input circuit failure information (step S16).

When detected that the occurring failure is only the open failure of the booster driver (FET) 202 (YES), the components of the booster circuit 200 other than the booster driver (FET) 202 are continuously available, and the boosting operation by the booster circuit 100 is continued.

On the other hand, when detected that the occurring failure is not an open failure of the booster driver (FET) 202 (NO), the upstream stage current cutoff circuit 210 and the downstream stage current cutoff circuit 211 are turned OFF (step S17) to electrically separate the booster circuit 200 and the boosting operation by the booster circuit 100 is continued.

When detected in step S6 that the occurring failure is not a short-circuit failure of the booster driver (FET) 102 (NO), the calculation device 30 determines whether or not the occurring failure is only an open failure of the booster driver (FET) 102 based on the input circuit failure information (step S15).

When detected that the occurring failure is only the open failure of the booster driver (FET) 102 (YES), the components of the booster circuit 100 other than the booster driver (FET) 102 are continuously available, and the boosting operation by the booster circuit 200 is continued.

On the other hand, when detected that the occurring failure is not an open failure of the booster driver (FET) 102 (NO), the upstream stage current cutoff circuit 110 and the downstream stage current cutoff circuit 111 are turned OFF (step S19) to electrically separate the booster circuit 100 and the boosting operation by the booster circuit 200 is continued.

In the present example, the current cutoff circuit is configured to be controlled independently of each other, so that the booster capacitor can be continuously used as a rechargeable battery when the booster capacitor is continuously available.

Furthermore, when the range of the open failure is any one of the booster coils, the booster driver (FET), and the booster diode, the effect similar to that at the time of the failure of the booster driver (FET) can be obtained by prohibiting OFF of the current cutoff circuit.

However, in order to continue boosting by avoiding breakdown of the remaining booster circuit due to heat even in the case of failure of any component, it is necessary to switch to the upper/lower limit current set values suitable for the number of remaining booster circuits, and thus similarly to the first example, boosting is stopped, an optimum table corresponding to the number of remaining circuits is selected as a table for the upper/lower limit current set values, and then the current cutoff circuit resumes boosting while continuing current conduction by being turned ON.

### Third Example

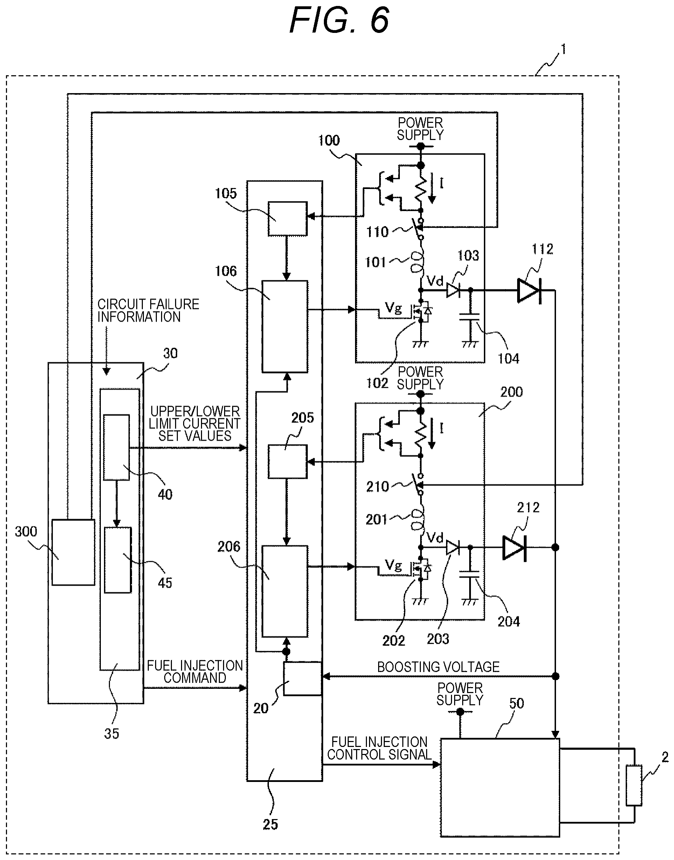

A fuel injection valve control device and a method for controlling the fuel injection valve control device according to a third example of the present invention will be described with reference to FIG. 6. FIG. 6 is a functional block diagram of a fuel injection valve control device 1 of the present example.

As illustrated in FIG. 6, the fuel injection valve control device 1 of the present example is different from that of the first example (FIG. 1) and the second example (FIG. 4) in that a downstream stage current backflow prevention diode 112 and 212 is arranged on each voltage output side of the booster circuit 100 and the booster circuit 200, respectively, instead of the downstream stage current cutoff circuits 111 and 211 of the first example (FIG. 1) and the second example (FIG. 4). Other configurations are similar to those of the first example (FIG. 1) and the second example (FIG. 4).

As a configuration of the circuit, the downstream stage current cutoff circuit 111 is changed to the downstream stage current backflow prevention diode 112, and the downstream stage current cutoff circuit 211 is changed to the downstream stage current backflow prevention diode 212.

When a short-circuit failure occurs in the booster capacitor 104 and the booster capacitor 204, a current backflow from the output side of another parallel circuit needs to be cut off in addition to the current inflow from the power supply in order to electrically separate the failed booster circuit. Therefore, by connecting each of the anode side of the downstream stage current backflow prevention diodes 112 and 212 to the output side of the booster circuit so that the cathode side is the voltage output side, current backflow from the output side of another parallel circuit can be cut off.

In the present example, since the downstream stage current cutoff circuit is changed to the downstream stage current backflow prevention diode, the ON/OFF of the downstream stage current cutoff circuit does not need to be controlled, so that a circuit drive load for operating the downstream stage current cutoff circuit from the calculation device 30 can be reduced.

### Fourth Example

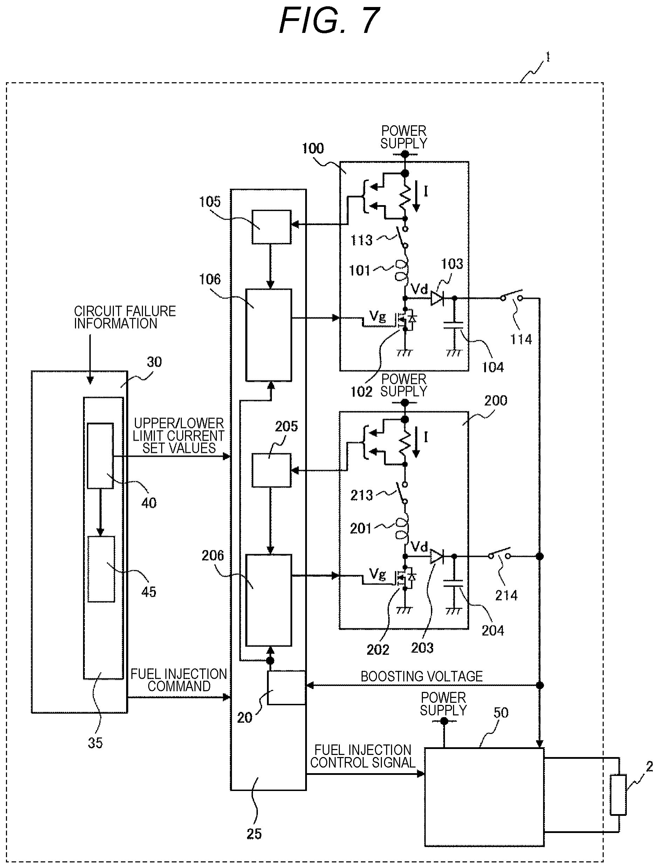

A fuel injection valve control device and a method for controlling the fuel injection valve control device according to a fourth example of the present invention will be described with reference to FIG. 7. FIG. 7 is a functional block diagram of a fuel injection valve control device 1 of the present example.

As shown in FIG. 7, the fuel injection valve control device 1 of the present example is different from that of the first example (FIG. 1) and the second example (FIG. 4) in that an autonomous current cutoff mechanism 113, 114, 213, and 214 is disposed instead of the upstream stage current cutoff circuit 110 and 210 and the downstream stage current cutoff circuit 111 and 211 of the first example (FIG. 1) and the second example (FIG. 4), respectively. Other configurations are similar to those of the first example (FIG. 1) and the second example (FIG. 4).

As a configuration of the circuit, the upstream stage current cutoff circuit and the downstream stage current cutoff circuit are changed to, for example, an element such as a fuse capable of autonomously cutting off current by passing a current of greater than or equal to a certain amount.

In the present example, it is possible to immediately electrically separate the fault circuit when an overcurrent greater than or equal to an expected amount flows to the circuit by changing the upstream stage current cutoff circuit and the downstream stage current cutoff circuit to an element capable of autonomously cutting off the current by passing a current of greater than or equal to a certain amount.

As a result, it is possible to further reduce the risk of secondary failures such as burnout of the substrate due to further heat generation of the failed circuit portion and breakdown of the power supply circuit that is a current supply source to the booster circuit due to continuous flow of the power supply current to the fault circuit.

In addition, since the ON/OFF of the current cutoff circuit does not need to be controlled from the calculation device 30, a circuit drive load for cutting off current by the calculation device 30 can be reduced.

In each of the above examples, the fuel injection valve control device configured to drive and control the fuel injection valve has been described as an example of the load driving device, but the paralleled booster circuit is assumed to be widely used for the purpose of reducing a circuit load due to a heat loss per circuit, such as a drive device for driving a high-output motor such as an automobile device, a load driving device that requires boosting of a high voltage, and a load driving device that places importance on charging speed, and present invention can be applied to all of the above-described load drive measures.

In addition, the present invention is not limited to the above-described examples, and includes various modified examples. For example, the above-described examples have been described in detail for easy understanding of the present invention, and the present invention is not necessarily limited to those having all the described configurations. In addition, a part of the configuration of a certain example can be replaced with the configuration of another example, and the configuration of another example can be added to the configuration of a certain example. In addition, it is possible to add, delete, and replace other configurations for a part of the configuration of each example.

### Reference Signs List

1 fuel injection valve control device (load driving device)
2 fuel injection valve (load)
20 voltage monitor
25 fuel injection control IC
30 calculation device
35 boost setting controller
40 current table selector
45 current table
50 fuel injection circuit
100, 200 booster circuit
101, 201 booster coil
102, 202 booster driver (FET)
103, 203 booster diode
104, 204 booster capacitor
105, 205 current monitor
106, 206 boost controller
110, 210 upstream stage current cutoff circuit
111, 211 downstream stage current cutoff circuit
112, 212 downstream stage current backflow prevention diode
113, 114, 213, 214 autonomous current cutoff mechanism
300 current cutoff controller

## Claims

1. A load driving device comprising:
a first booster circuit;
a second booster circuit connected in parallel to the first booster circuit;
a first current cutoff circuit disposed on an upper stage side of the first booster circuit;
a second current cutoff circuit disposed on a lower stage side of the first booster circuit;
a third current cutoff circuit disposed on an upper stage side of the second booster circuit;
a fourth current cutoff circuit disposed on a lower stage side of the second booster circuit; and
a calculation device configured to calculate a control command for controlling the first booster circuit and the second booster circuit,
wherein when a failure of the first booster circuit is detected, the calculation device causes the first current cutoff circuit to cut off a current from a power supply to the first booster circuit, and changes a current set value of the second booster circuit to be lower than that before the failure to operate the second booster circuit.

2. The load driving device according to claim 1, wherein when a failure of the first booster circuit is detected and the detected failure is detected to be a short-circuit failure of a component constituting the first booster circuit, the calculation device causes the first current cutoff circuit to cut off a current from the power supply to the first booster circuit, and causes the second current cutoff circuit to cut off a current from the second booster circuit to the first booster circuit.

3. The load driving device according to claim 1, wherein the second current cutoff circuit and the fourth current cutoff circuit are diodes disposed so that anode sides are connected to output sides of the first booster circuit and the second booster circuit and cathode sides are on a voltage output side, respectively.

4. The load driving device according to claim 1, wherein each of the first current cutoff circuit, the second current cutoff circuit, the third current cutoff circuit, and the fourth current cutoff circuit is an element that autonomously cuts off a current when a current of greater than or equal to a certain amount is passed.

5. The load driving device according to claim 1, wherein boosting operations of the first booster circuit and the second booster circuit are stopped before changing the current set value of the second booster circuit to be lower.

6. The load driving device according to claim 1, wherein when a failure of the first booster circuit is detected and the detected failure is detected to be an open failure of a component constituting the first booster circuit, the calculation device does not cut off a current by the first current cutoff circuit, the second current cutoff circuit, the third current cutoff circuit, and the fourth current cutoff circuit.

7. The load driving device according to claim 1, wherein the first current cutoff circuit, the second current cutoff circuit, the third current cutoff circuit, and the fourth current cutoff circuit are controllable independently of each other.

8. The load driving device according to claim 1, wherein when a failure of the first booster circuit is detected and the detected failure is detected to be a short-circuit failure of a booster driver constituting the first booster circuit, the calculation device operates only the first current cutoff circuit and cuts off the current from the power supply to the first booster circuit.

9. A method for controlling a load driving device including a plurality of booster circuits connected in parallel, the method comprising:
(a) detecting a failure of a booster circuit;
(b) cutting off a current to the failed booster circuit based on failure information detected in the step (a); and
(c) after the step (b), changing a current sett value of a booster circuit other than the failed booster circuit to be lower than that before the failure to operate the booster circuit other than the failed booster circuit.

10. The method for controlling the load driving device according to claim 9, wherein when the failure detected in the step (a) is a short-circuit failure of a component constituting the booster circuit, a current from a power supply to the failed booster circuit is cut off and a current from a booster circuit other than the failed booster circuit to the failed booster circuit is cut off.

11. The method for controlling the load driving device according to claim 9, further comprising stopping boosting operations of the plurality of booster circuits before the step (c).

12. The method for controlling the load driving device according to claim 9, wherein when the failure detected in the step (a) is an open failure of a component constituting the booster circuit, the current is not cut off in the step (b).

13. The method for controlling the load driving device according to claim 9, wherein when the failure detected in the step (a) is a short-circuit failure of a booster driver constituting the booster circuit, only a current from a power supply to the failed booster circuit is cut off.
